# EUROPEAN PATENT SPECIFICATION

(11) **EP 3 764 155 B1**
(45) Date of publication and mention of the grant of the patent: **08.11.2023**
(21) Application number: 18909078.0
(22) Date of filing: 10.05.2018
(51) Int. Cl.: G02F 1/1335, G02F 1/1333, G02F 1/13357

(54) **DISPLAY DEVICE**
ANZEIGEVORRICHTUNG
DISPOSITIF D'AFFICHAGE

(30) Priority: 07.03.2018 KR 20180027046
(43) Date of publication of application: 13.01.2021
(73) Proprietor: LG Electronics Inc., 07336 SEOUL (KR)
(72) Inventor: CHANG, Myungwhun, Seoul 06772 (KR); KIM, Donghyun, Seoul 06772 (KR); KIM, Yanghyun, Seoul 06772 (KR); SHIN, Jonggon, Seoul 06772 (KR); JANG, Munseok, Seoul 06772 (KR); CHOI, Sangho, Seoul 06772 (KR); HAN, Jinkyo, Seoul 06772 (KR)
(74) Representative: Vossius & Partner Patentanwälte Rechtsanwälte mbB
(86) International application number: PCT/KR2018/005395
(87) International publication number: WO 2019/172483

(56) References cited:
- EP-A1- 2 343 478
- EP-A1- 2 458 263
- EP-A1- 2 930 556
- EP-A1- 3 115 838
- WO-A1-2012/033015
- WO-A1-2012/063676
- JP-A- 2007 322 697
- JP-A- 2010 218 915
- KR-A- 20080 043 567
- KR-A- 20150 065 318
- KR-A- 20160 099 774
- US-A1- 2007 103 908

## Description

### [Technical Field]

The present disclosure relates to a display device.

### [Background Art]

As the information society develops, the demand for display devices is also increasing in various forms, and in response to this, various display devices such as a liquid crystal display device (LCD), a plasma display panel (PDP), an electroluminescent display (ELD), and a vacuum fluorescent display (VFD) have been researched and used.

Among them, a liquid crystal panel of the LCD may include a liquid crystal layer and a TFT substrate and a color filter substrate facing each other with the liquid crystal layer interposed therebetween, and may display images using light provided from a backlight unit.

Relevant background art, according to Rule 41(1)(b) EPC, which can be regarded as useful for understanding the invention includes, EP 2 458 263 A1 (SHARP KK [JP]) 30 May 2012 (2012-05-30), EP 2 930 556 A1 (FUNAI ELECTRIC CO [JP]) 14 October 2015 (2015-10-14), WO 2012/063676 A1 (SHARP KK [JP]; SHIMIZU TAKAHARU) 18 May 2012 (2012-05-18), EP 3 115 838 A1 (SAMSUNG ELECTRONICS CO LTD [KR]) 11 January 2017 (2017-01-11), US 2007/103908 A1 (TABITO HAFUKA [JP] ET AL) 10 May 2007 (2007-05-10), WO 2012/033015 A1 (SHARP KK [JP]; NAMEKATA YUUKI) 15 March 2012 (2012-03-15), EP 2 343 478 A1 (SHARP KK [JP]), JP 2007 322697 A (SONY CORP.) 13 December 2007 (2007-12-13), KR 2008 0043567 A (SAMSUNG ELECTRONICS CO., LTD.) 19 May 2008 (2008-05-19), JP 2010 218915 A (SHARP CORP.) 30 September 2010 (2010-09-30), KR 2015 0065318 A (LG INNOTEK CO., LTD.) 15 June 2015 (2015-06-15) and KR 2016 0099774 A (SAMSUNG DISPLAY CO., LTD.) 23 August 2016 (2016-08-23)

### [Detailed Description of Invention]

### [Technical Problem]

The present disclosure aims to solve the above-mentioned problems and other problems. Another object may be to improve durability of the display device.

Another object may be to improve convenience of assembling of the display device.

Another object may be to improve reliability of a light source of the display device.

### [Technical Solution]

The display device according to the present invention comprises the features of claim 1. Preferred embodiments are disclosed in the dependent claims.

### [Advantageous Effects]

Description of effects of the display device according to the present disclosure is as follows.

According to at least one of the embodiments of the present disclosure, it is possible to improve durability of the display device.

According to at least one of the embodiments of the present disclosure, it is possible to improve reliability of a light source of the display device.

According to at least one of the embodiments of the present disclosure, it is possible to improve convenience of assembling of the display device.

Additional scope of applicability of the present disclosure will become apparent from the following detailed description. However, various changes and modifications within the spirit and scope of the present disclosure may be clearly understood by those skilled in the art, and thus, it should be understood that specific embodiments, such as the detailed description and preferred embodiments of the present disclosure, are given only by way of illustration.

### [Description of Drawings]

FIGS. 1 to 3 are diagrams illustrating examples of a display device according to an embodiment of the present disclosure.
FIG. 4 is a diagram illustrating an example of a light source according to an embodiment of the present disclosure.
FIGS. 5 and 6 are diagrams illustrating examples of a substrate according to an embodiment of the present disclosure.
FIG. 7 is a diagram illustrating an example of a hole in a reflective sheet according to an embodiment of the present disclosure.
FIG. 8 is a diagram illustrating an example of a coupling relationship between a light source and a reflective sheet according to an embodiment of the present disclosure.
FIGS. 9 to 11 are diagrams illustrating an example of a supporter.
FIG. 12 is a diagram illustrating 2. an example of a supporter according to an embodiment of the present disclosure.
FIGS. 13 to 15 are diagrams illustrating examples of a coupling relationship between a reflective sheet and a supporter according to an embodiment of the present disclosure.

### [Mode for Invention]

Hereinafter, embodiments of the present disclosure will be described in detail with reference to the accompanying drawings, however, the same or similar elements are denoted by the same reference numerals regardless of the reference numerals, and redundant description thereof will be omitted.

The suffixes "module" and "part" for components used in the following description are given or mixed in consideration of ease of specification, and do not have their own meaning or role. Further, in describing the embodiments disclosed in the present disclosure, when it is determined that the detailed description of the related art is likely to blur the gist of the embodiment disclosed in the present disclosure, a detailed description thereof will be omitted. Also, the accompanying drawings are only for the purpose of easily understanding the embodiments disclosed in the present disclosure, and the technical idea disclosed in the present disclosure is not limited by the accompanying drawings, it should be understood that the present disclosure include all modifications, equivalents and substitutes included within the spirit and technical scope of the present disclosure.

Hereinafter, a liquid crystal display (LCD) will be described as an example of a display panel, but the display panel applicable to the present disclosure is not limited to the LCD panel, and it may also be a plasma display panel (PDP), a field emission display (FED), or an organic light emitting diode (OLED).

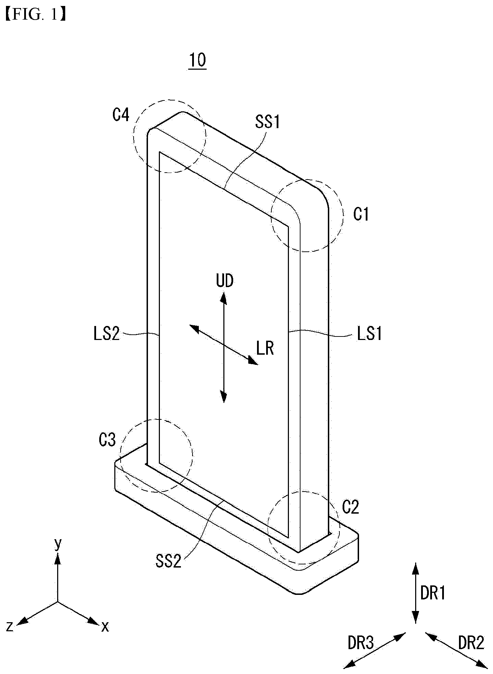

Referring to FIG. 1, a display device may include a first long side LS1, a second long side LS2 opposite the first long side LS1, a first short side SS1 adjacent to the first long side LS1 and the second long side LS2, and a second short side SS2 opposite the first short side SS1.

Here, it is possible that the first short side area SS1 is referred to as a first side area, the second short side area SS2 is referred to as a second side area opposite the first side area, the first long side area LS1 is referred to as a third side area adjacent to the first side area and the second side area and positioned between the first side area and the second side area, and the second long side area LS2 is referred to as a fourth side area adjacent to the first side area and the second side area and positioned between the first side area and the second side area and opposite the third side area.

In addition, for convenience of description, although lengths of the first and second long sides LS1 and LS2 are longer than lengths of the first and second short sides SS1 and SS2, the lengths of the first and second long sides LS1 and LS2 may be approximately equal to the lengths of the first and second short sides SS1 and SS2.

In addition, hereinafter, a first direction DR1 may be a direction parallel to the short sides SS1 and SS2 of a display device, and a second direction DR2 may be a direction parallel to the long sides LS1 and LS2 of the display device. A third direction DR3 may be a direction perpendicular to the first direction DR1 and/or the second direction DR2. The first direction DR1 and the second direction DR2 may be collectively referred to as a horizontal direction. In addition, the third direction DR3 may be referred to as a vertical direction.

A side where the display device displays images may be referred to as a front side or a front surface. When the display device displays images, a side where the images cannot be observed may be referred to as a back side or a back surface. When looking at the display device from the front side or the front surface, the first long side LS1 may be referred to as a right side or a right surface. Similarly, the second long side LS2 may be referred to as a left side or a left surface. Similarly, the first short side SS1 may be referred to as an upper side or an upper surface, and the second short side SS2 may be referred to as a lower side or a lower surface.

In addition, the first long side LS1, the second long side LS2, the first short side SS1, and the second short side SS2 may be referred to as edges of the display device. In addition, a point at which the first long side LS1, the second long side LS2, the first short side SS1, and the second short side SS2 meet each other may be referred to as a corner. For example, a point where the first long side LS1 meets the first short side SS1 may be a first corner C1, a point where the first long side LS1 meets the second short side SS2 may be a second corner C2, a point where the second short side SS2 meets the second long side LS2 may be a third corner C3, and a point where the second long side LS2 meets the first short side SS1 may be a fourth corner C4.

Here, a direction from the first short side SS1 to the second short side SS2 or a direction from the second short side SS2 to the first short side SS1 may be referred to as an up-down direction UD. A direction from the first long side LS1 to the second long side LS2 or a direction from the second long side LS2 to the first long side LS1 may be referred to as a left-right direction LR.

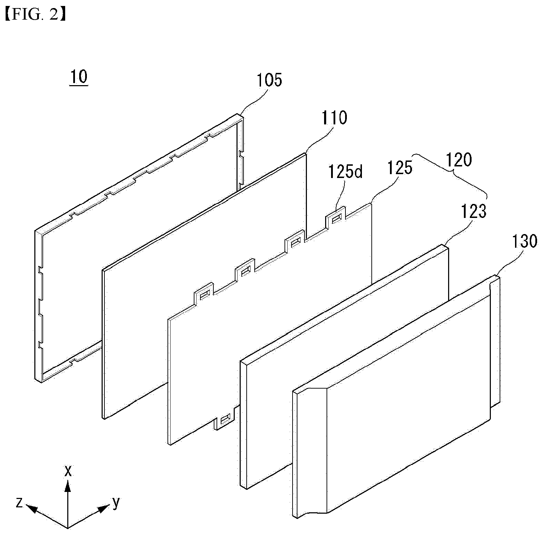

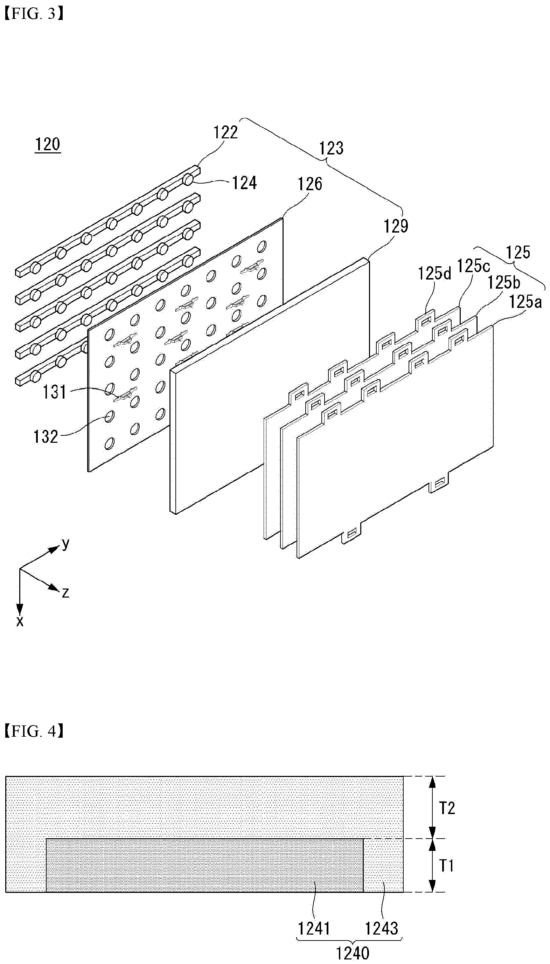

Referring to FIGS. 2 and 3, a display device 100 may include a front cover 105, a display panel 110, a backlight unit 120, and a module cover 130. The module cover 130 may be referred to as a frame 130.

The front cover 105 may cover at least some of front and side surfaces of the display panel 110. The front cover 105 may have a rectangular frame shape with an empty center. Since the center of the front cover 105 is empty, images of the display panel 110 may be displayed outside.

The front cover 105 may include a front cover and a side cover. That is, it means that the front cover is positioned on the front surface of the display panel 110 and the side cover is positioned on the side surface of the display panel 110. The front cover and side cover may be configured separately. Either the front cover or the side cover may be omitted.

The display module 100 may include the display panel 110. The display panel 110 is provided on the front surface of the display module 100 and an image may be displayed. The display panel 110 may divide the image into a plurality of pixels and output the image by matching color, brightness, and chroma per pixel. The display panel 110 may be divided into an active area in which an image is displayed and an inactive area in which an image is not displayed. The display panel 110 may include a front substrate and a rear substrate facing each other with a liquid crystal layer interposed therebetween.

The front substrate may include a plurality of pixels composed of red (R), green (G), and blue (B) sub-pixels. The front substrate may generate an image corresponding to red, green, or blue color according to a control signal.

The rear substrate may include switching elements. The rear substrate may switch a pixel electrode. For example, the pixel electrode may change molecular arrangement of the liquid crystal layer according to a control signal applied from the outside. The liquid crystal layer may include a plurality of liquid crystal molecules. The liquid crystal molecules may change an arrangement in correspondence to a voltage difference generated between the pixel electrode and a common electrode. The liquid crystal layer may transmit light provided from the backlight unit 120 to the front substrate.

The backlight unit 120 may be positioned on a back surface of the display panel 110. The backlight unit 120 may include a plurality of light sources. The light source of the backlight unit 120 may be arranged as a direct type.

The backlight unit 120 may be coupled to a front side of the frame 130. For example, it means that the plurality of light sources may be disposed on the front side of the frame 130, and in this case, it may be referred to as a direct type of backlight unit.

The backlight unit 120 may be driven by a full driving method or a partial driving method such as local dimming or impulsive. The backlight unit 120 may include an optical sheet 125 and an optical layer 123. The optical layer 123 may be referred to as an optical unit 123.

The optical sheet 125 may allow light from the light source to be evenly transmitted to the display panel 110. The optical sheet 125 may be composed of a plurality of layers. For example, it may include at least one prism sheet and/or at least one diffusion sheet.

The optical sheet 125 may include a coupling part 125d. The coupling part 125d may be coupled to the front cover 105 and/or the frame 130. Alternatively, the coupling part 125d may be coupled to a structure coupled on the front cover 105 and/or the frame 130.

The optical layer 123 may include a light source or the like. The specific configuration of the optical layer 123 will be described in the corresponding part.

The frame 130 may serve to support components of the display device. For example, a configuration such as the backlight unit 120 may be coupled to the frame 130. The frame 130 may be made of a metal material such as aluminum alloy.

Alternatively, the frame 130 may be positioned on a back surface of the display device. The frame 130 may protect internal components from the outside. At least a part of the frame 130 may be coupled to the front cover 105. The frame 130 may be an injection material of a resin material.

The backlight unit 120 may include the optical layer 123 including a substrate 122, at least one optical assembly 124, a reflective sheet 126, and a diffusion plate 129, and the optical sheet 125 positioned on the front side of the optical layer 123.

The substrate 122 may be formed in a plurality of straps extending in the first direction and spaced apart at a predetermined distance in the second direction orthogonal to the first direction.

At least one optical assembly 124 may be mounted on the substrate 122. The substrate 122 may be formed with an electrode pattern for connecting an adapter and the optical assembly 124. For example, the substrate 122 may be formed with a carbon nanotube electrode pattern for connecting the optical assembly 124 and the adapter.

The substrate 122 may be made of at least one of polyethylene terephthalate (PET), glass, polycarbonate (PC), and silicon. The substrate 122 may be a printed circuit board (PCB) on which at least one optical assembly 124 is mounted.

The optical assembly 124 may be disposed on the substrate 122 at a predetermined distance in the first direction. A diameter of the optical assembly 124 may be greater than a width of the substrate 122. That is, it may mean that it may be greater than the length of the second direction of the substrate 122.

The optical assembly 124 may be a light emitting diode (LED) chip or a light emitting diode package including at least one light emitting diode chip.

The light assembly 124 may be composed of a colored LED emitting at least one color among colors such as red, blue, and green or a white LED. The colored LED may include at least one of a red LED, a blue LED, and a green LED.

The light source included in the optical assembly 124 may be, for example, a chip on board (COB) type. The COB type may be a form of directly coupling the LED chip as a light source to the substrate 122 as a light source. Therefore, the process may be simplified. In addition, it is possible to lower the resistance, thereby reducing the energy lost to heat. That is, it means that the power efficiency of the optical assembly 124 can be increased. The COB type may provide brighter illumination. The COB type may be implemented thinner and lighter than the conventional one.

The reflective sheet 126 may be positioned on the front side of the substrate 122. The reflective sheet 126 may be positioned on an area other than the area where the optical assembly 124 of the substrate 122 is formed. That is, it means that a plurality of through holes 132 may be formed in the reflective sheet 126.

The reflective sheet 126 may reflect light emitted from the optical assembly 124 toward the front side. Also, the reflective sheet 126 may reflect light reflected from the diffusion plate 129 again.

The reflective sheet 126 may include at least one of metal and metal oxide, which are reflective materials. For example, the reflective sheet 126 may include metal and/or metal oxide having a high reflectivity such as at least one of aluminum (Al), silver (Ag), gold (Au), and titanium dioxide (TiO2).

The reflective sheet 126 may be formed by depositing and/or coating metal or metal oxide on the substrate 122. The reflective sheet 126 may be printed with ink containing a metal material. The reflective sheet 126 may be formed with a deposition layer using a vapor deposition method such as a thermal deposition method, an evaporation method, or a sputtering method. A coating layer and/or a printing layer using a printing method, a gravure coating method, or a silk screen method may be formed on the reflective sheet 126.

An air gap may be positioned between the reflective sheet 126 and the diffusion plate 129. The air gap may serve as a buffer through which light emitted from the light assembly 124 can be widely spread. In order to maintain the air gap, a supporter 131 may be positioned between the reflective sheet 126 and the diffusion plate 129.

Resin may be deposited on the optical assembly 124 and/or the reflective sheet 126. The resin may serve to diffuse light emitted from the light assembly 124. The diffusion plate 129 may diffuse light emitted from the light assembly 124 upward.

The optical sheet 125 may be positioned on the front side of the diffusion plate 129. A back surface of the optical sheet 125 may be in close contact with the diffusion plate 129, and a front surface of the optical sheet 125 may be in close contact with the back surface of the display panel 110 (see FIG. 2).

The optical sheet 125 may include at least one sheet. The optical sheet 125 may include one or more prism sheets and/or one or more diffusion sheets. The plurality of sheets included in the optical sheet 125 may be in a state of adhesion and/or closed contact.

The optical sheet 125 may be composed of a plurality of sheets having different functions. For example, the optical sheet 125 may include first to third optical sheets 125a to 125c. The first optical sheet 125a may have a function of a diffusion sheet, and the second and third optical sheets 125b and 125c may have a function of a prism sheet. The number and/or position of the diffusion sheet and prism sheet may be changed. For example, it means that the first optical sheet 125a which is a diffusion sheet and the second optical sheet 125b which is a prism sheet may be included.

The diffusion sheet may prevent light emitted from the diffusion plate 129 from being partially concentrated, thereby making the distribution of light more uniform. The prism sheet may collect light from the diffusion sheet and allow light to be incident perpendicularly to the display panel 110.

The coupling part 125d may be formed on at least one of the corners of the optical sheet 125. The coupling part 125d may be formed on at least one of the first to third optical sheets 125a to 125c.

The coupling part 125d may be formed at a long side edge of the optical sheet 125. The coupling part 125d formed on the first long side and the coupling part 125d formed on the second long side may be asymmetric. For example, it means that the position and/or number of the coupling part 125d on the first long side and the coupling part 125d on the second long side may be different from each other.

Referring to FIG. 4, a light source 1240 may be, for example, an LED package. The light source 1240 may include an LED chip 1241 and an encapsulant 1243. For example, the LED chip 1241 may have a thickness T1 of 200 micrometers. The encapsulant 1243 may include a phosphor. For example, the LED chip 1241 may be a blue LED, and the phosphor included in the encapsulant 1243 may be a yellow-based or red-based phosphor. Accordingly, the light source 1240 may provide white light. For example, the encapsulant 1243 may have a thickness T2 of 200 micrometers. The encapsulant 1243 may surround the LED chip 1241.

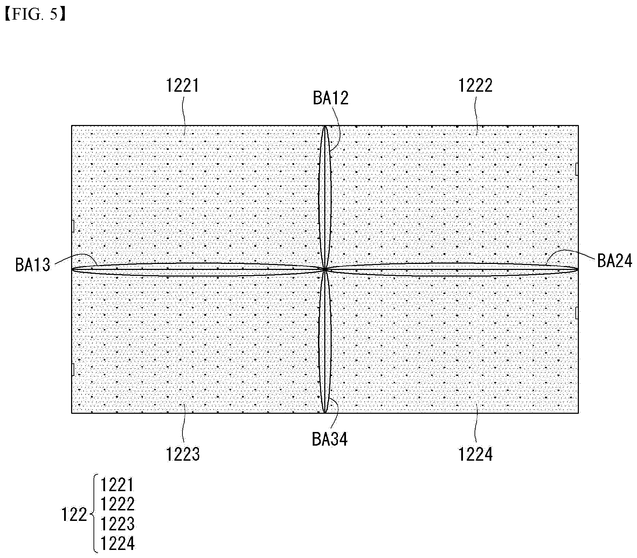

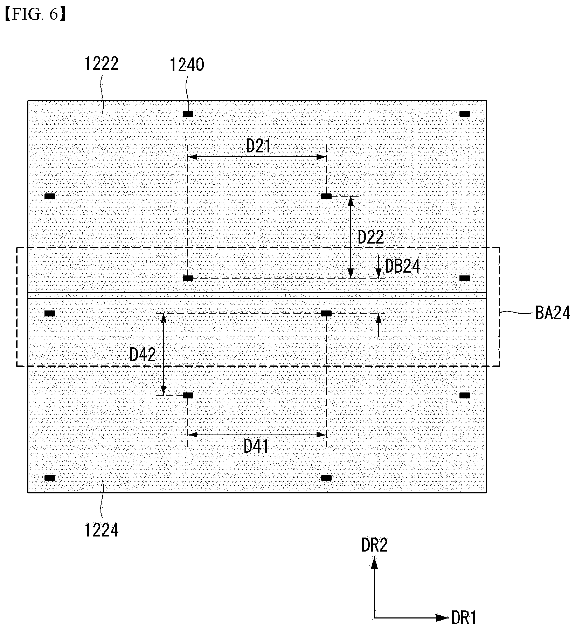

Referring to FIGS. 5 and 6, the substrate 122 may be a flat plate. There may be a plurality of substrates 122. The plurality of substrates 122 may be disposed adjacent to each other. A second substrate 1222 may be disposed on the right side of a first substrate 1221, a third substrate 1223 may be disposed under the first substrate 1221, and a fourth substrate 1224 may be disposed under the second substrate 1222 and on the right side of the third substrate 1223.

A plurality of light sources 1240 may be mounted on the first substrate 1221. The plurality of light sources 1240 may be disposed on the first substrate 1221 while maintaining a constant distance. The plurality of light sources 1240 may be disposed on the second substrate 1222 while maintaining a constant distance. The plurality of light sources 1240 may be disposed on the third substrate 1223 while maintaining a constant distance. The plurality of light sources 1240 may be disposed on the fourth substrate 1224 while maintaining a constant distance.

The plurality of light sources 1240 may be disposed at the same distance from each other on the first substrate 1221 to the fourth substrate 1224. In other words, the plurality of light sources 1240 disposed on one substrate 122 may maintain the constant distance from each other.

For example, on the second substrate 1222 first direction distances D21 of the plurality of light sources 1240 may be constant with each other, and second direction distances D22 of the plurality of light sources 1240 may be constant with each other. In addition, on the fourth substrate 1224 first direction distances D41 of the plurality of light sources 1240 may be constant with each other, and second direction distances D42 of the plurality of light sources 1240 may be constant with each other.

A boundary area between the first substrate 1221 and the second substrate 1222 may be referred to as a 12th boundary area BA12, a boundary area between the first substrate 1221 and the third substrate 1223 may be referred to as a 13th substrate area BA13, a boundary area between the second substrate 1222 and the fourth substrate 1224 may be referred to as a 24th substrate area BA24, and a boundary area between the third substrate 1223 and the fourth substrate 1224 may be referred to as a 34th substrate area BA34.

For example, in the 24th boundary area BA24, a distance DB24 between the light source 1240 disposed on the second substrate 1222 and the light source 1240 disposed on the fourth substrate 1224 may be smaller than the distance D42 or the distance D22. That is, in the 24th boundary area BA24, the second direction distance DB24 between the light source 1240 disposed on the second substrate 1222 and the light source 1240 disposed on the fourth substrate 1224 may be smaller than the second direction distance D22 between the light sources 1240 disposed on the second substrate 1222 or the second direction distance D42 between the light sources 1240 disposed on the fourth substrate 1224. This can inhibit light uniformity of the display device.

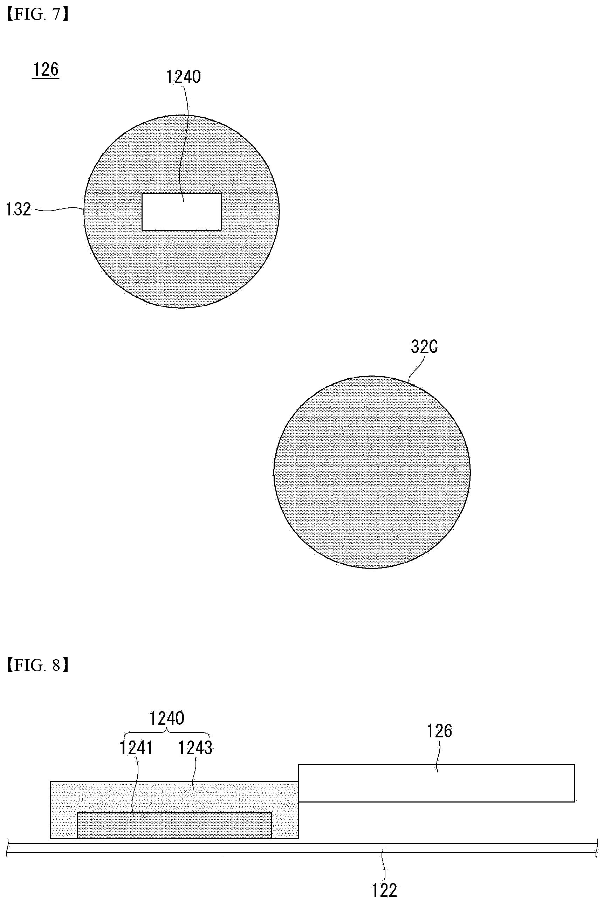

Referring to FIG. 7, the reflective sheet 126 may include a hole 132. The hole 132 of the reflective sheet 126 may be formed by drilling the reflective sheet 126 in various shapes. The hole 132 of the reflective sheet 126 may be positioned corresponding to the light source 1240. A coupling hole 132C may be positioned around the hole 132.

Referring to FIG. 8, the reflective sheet 126 may be placed on the substrate 122 and hit the upper part of the light source 1240 or the encapsulant 1243. While the reflective sheet 126 impacts or hits the upper part of the light source 1240 or the encapsulant 1243, the encapsulant 1243 may be separated from the LED chip 1241. Accordingly, the light source 1240 may not provide white light.

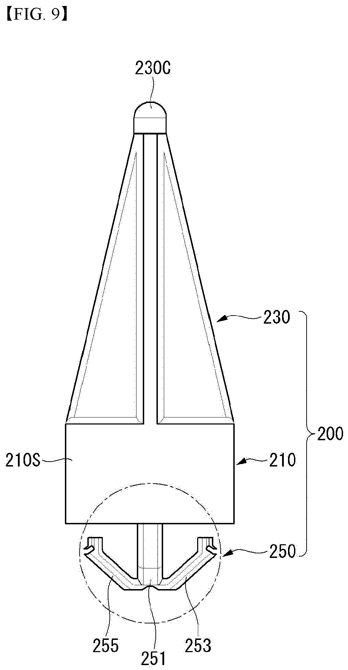

Referring to FIGS. 9 to 11, a supporter 200, useful for understanding the claimed invention, includes a body 210, a guide 230, and a fixing part 250. The guide 230 may be formed on an upper part of the body 210, and the fixing part 250 may be formed on a lower part of the body 210. The body 210 may be cylindrical. The diameter DS of the body 210 may be substantially the same as or slightly smaller than the diameter of the coupling hole 132C (see FIG. 7) of the reflective sheet. For example, the height of the body 210 may be 1/2 or more of the diameter DS of the body 210.

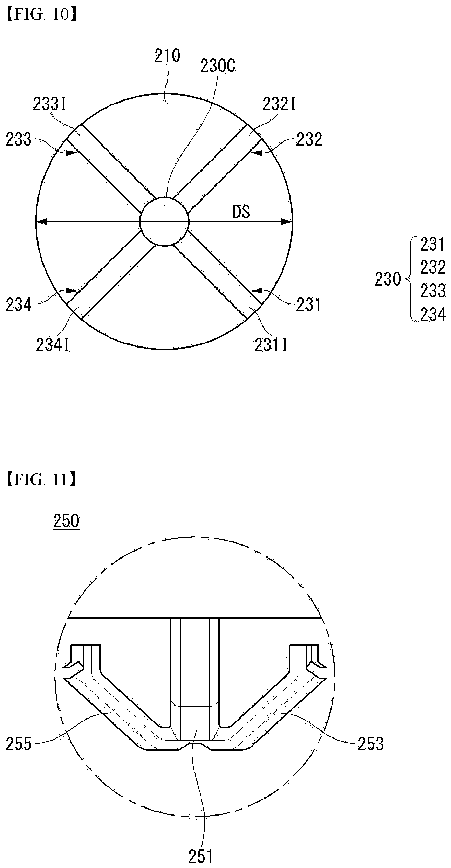

Referring to FIGS. 9 and 10, the guide 230 may gradually become thinner as it moves away from the upper part of the body 210. The guide 230 may have a conical shape as a whole. The guide 230 may include a first part 231, a second part 232, a third part 233, and a fourth part 234. The first part 231 to the fourth part 234 may be triangular plates. The first part 231 may face the third part 233 with respect to a guide center 230C, and the second part 232 may face the fourth part 234 with respect to the guide center 230C. The first part 231 may be referred to as a first guide wall 231, the second part 232 may be referred to as a second guide wall 232, the third part 233 may be referred to as a third guide wall 233, and the fourth part 234 may be referred to as a fourth guide wall 234.

An inclined surface 2311 of the first part 231 may be smoothly extended from a side surface 210S of the body 210, an inclined surface 232I of the second part 232 may be smoothly extended from the side surface 210S of the body 210, an inclined surface 2331 of the third part 233 may be smoothly extended from the side surface 210S of the body 210, and an inclined surface 2341 of the fourth part 234 may be smoothly extended from the side surface 210S of the body 210.

The inclined surface 231I of the first part 231 may be referred to as a first guide inclined surface 2311, the inclined surface 232I of the second part 232 may be referred to as a second guide inclined surface 232I, the inclined surface 2331 of the third part 233 may be referred to as a third guide inclined surface 233I, and the inclined surface 234I of the fourth part may be referred to as a fourth guide inclined surface 234I.

For example, the first part 231 may be perpendicular to the second part 232 and/or the fourth part 234, and the third part 233 may be perpendicular to the second part 232 and/or the fourth part 234. For another example, the second part 232 and/or the fourth part 234 may be omitted. For another example, the fourth part 234 may be omitted, and the first part 231 may be disposed at an angle of 120 degrees with the second part 232 and/or the third part 233.

Referring to FIGS. 9 and 11, the fixing part 250 may include a rod 251 and hooks 253 and 255. The rod 251 may extend from the lower part or lower surface of the body 210 toward the lower side of the supporter 200. The hooks 253 and 255 may extend from the end of rod 251 toward body 210. For example, the hooks 253 and 255 may extend while splitting in both directions at the end of the rods 251. The ends of the hooks 253 and 255 may be closer to the body 210 than the end of the rod 251.

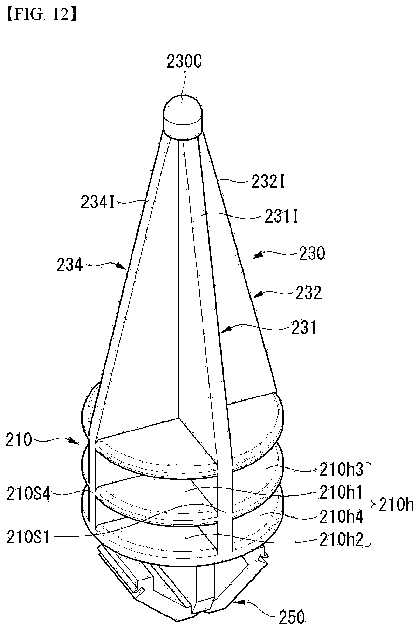

Referring to FIG. 12, a plurality of grooves 210h may be formed on an outer circumferential surface of the body 210. The plurality of grooves 210h may be sequentially disposed on the outer circumferential surface of the body 210. The plurality of grooves 210h may be spaced apart from each other. A first groove 210h1 may be formed on the upper part of the body 210 between the first part 231 and the fourth part 234 of the guide 230. A second groove 210h2 may be positioned adjacent to the lower part of the first groove 210h1. A third groove 210h3 may be positioned adj acent to the right side of the first groove 210h1, and a fourth groove 210h4 may be positioned adjacent to the right side of the second groove 210h2. The fourth groove 210h4 may be positioned adjacent to the lower part of the third groove 210h3. The first groove 210h1 to the fourth groove 210h4 may be spaced apart from each other by a constant distance.

The first part 231 may be referred to as a first guide wall 231, the second part 232 may be referred to as a second guide wall 232, the third part 233 may be referred to as a third guide wall 233, the fourth part 234 may be referred to as a fourth guide wall 234.

The inclined surface 231I of the first part 231 may be smoothly extended from a first side surface 210S1 of the body 210, the inclined surface 232I of the second part 232 may be smoothly extended from a second side 210S2 of the body 210, the inclined surface 233I of the third part 233 may be smoothly extended from a third side 210S3 of the body 210, and the inclined surface 234I of the fourth part 234 may be smoothly extended from a fourth side surface 210S4 of the body 210.

The first side surface 210S1 may be referred to as a first body side surface 210S1, the second side surface 210S2 may be referred to as a second body side surface 210S2, the third side surface 210S3 may be referred to as a third body side surface 210S3, and the fourth side surface 210S4 may be referred to as a fourth body side surface 210S4.

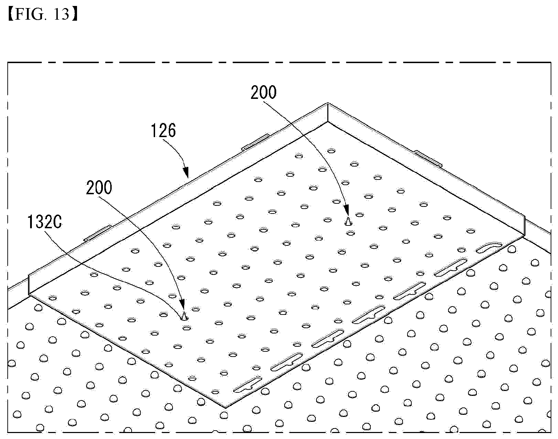

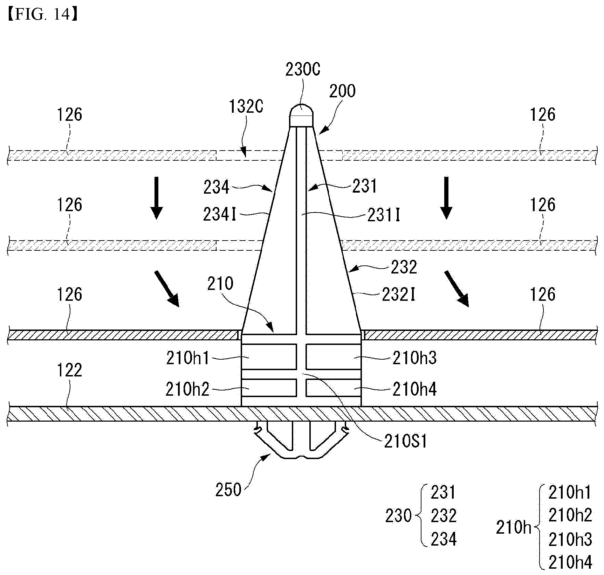

Referring to FIGS. 13 and 14, while the reflective sheet 126 is placed on the substrate 122, the coupling hole 132C of the reflective sheet 126 may be inserted into the guide center 230C of the supporter 200, and may be slid along the guide 230 and may guide the reflective sheet 126 to the correct position. The coupling hole 132C of the reflective sheet 126 guided along the guide 230 may be inserted into the body 210. Accordingly, it is possible to prevent the light source 1240 from being damaged while the reflective sheet 126 described with reference to FIG. 8 is placed on the substrate 122.

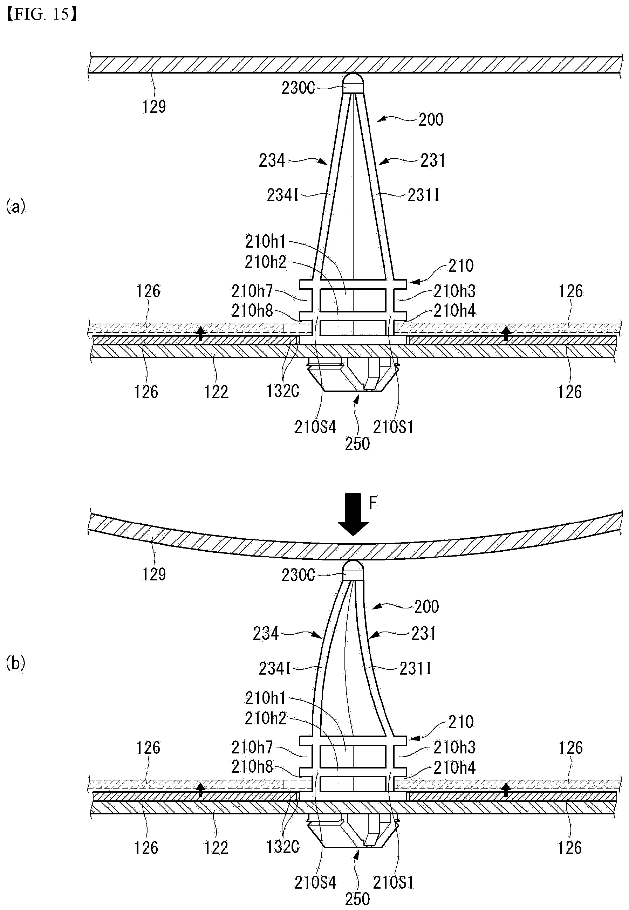

Referring to FIG. 15, the reflective sheet 126 placed on the substrate 122 may be detached from the substrate 122. At this time, in the process of moving the reflective sheet 126, the coupling hole 132C of the reflective sheet 126 may be inserted into the groove 210h of the supporter 200. Accordingly, it is possible to prevent the light source 1240 from being damaged while the reflective sheet 126 is detached from the substrate 122.

The diffusion plate 129 may be bent toward the substrate 122 by its own weight or by movement of the display device. This phenomenon may increase as the display device is larger. The supporter 200 may support the diffusion plate 129, but the degree of bending of the diffusion plate 129 may not be constant. The guide 230 and/or the guide center 230C of the supporter 200 may have elasticity. Accordingly, it is possible to prevent damage to the surface of the diffusion plate 129 as well as damage to the supporter 200.

Certain embodiments or other embodiments of the present disclosure described above are not mutually exclusive or distinct from each other. The certain embodiments or other embodiments of the present disclosure described above may be used together or combined with each other in configuration or function.

For example, it means that a configuration A described in the specific embodiments and/or drawings may be combined with a configuration B described in the other embodiments and/or drawings. That is, even if the combination between the configurations is not directly described, it means that the combination is possible except when it is described that the combination is impossible.

## Claims

1. A display device (10) comprising:
a display panel (110);
a substrate (122) positioned behind the display panel (110);
a plurality of light sources (1240) mounted on the substrate (122) and providing light to the display panel (110);
a reflective sheet (126) positioned on the substrate (122), and having a plurality of holes (132) formed corresponding to positions of the plurality of light sources (1240) and a coupling hole (132C) formed between the plurality of holes (132); and
a supporter (200) comprising a body (210) fixed to the substrate (122) and inserted into the coupling hole (132C); and
the supporter (200) including a guide (230) that gradually tapers and extends from an upper side of the body (210) toward the display panel (110),
wherein the body (210) of the supporter (200) is a cylinder shape corresponding to the coupling hole (132C), and
the guide (230) of the supporter (200) includes a guide inclined surface (2311, 232I, 2331, 234I) extending from a side surface of the body (210),
wherein the guide (230) of the supporter (200) includes:
a center (230C) of the guide (230) forming an upper end;
a first guide inclined surface (2311) extending from the center (230C) of the guide (230) to the side surface of the body (210);
a second guide inclined surface (232I) extending from the center (230C) of the guide (230) to the side surface of the body (210);
a third guide inclined surface (233I) extending from the center (230C) of the guide (230) to the side surface of the body (210); and,
a fourth guide inclined surface (234I) extending from the center (230C) of the guide (230) to the side surface of the body (210),
wherein the body (210) of the supporter (200) includes:
a first body side surface (210S1) extending from the first guide inclined surface (231I) and connecting an upper end and a lower end of the body (210);
a second body side surface (210S2) extending from the second guide inclined surface (232I) and connecting the upper end and the lower end of the body (210);
a third body side surface (210S3) extending from the third guide inclined surface (233I) and connecting the upper end and the lower end of the body (210); and,
a fourth body side surface (210S4) extending from the fourth guide inclined surface (234I) and connecting the upper end and the lower end of the body (210),
wherein the body (210) includes:
a first body groove (210h1) positioned between the first body side surface (210S1) and the fourth body side surface (210S4) and formed by being recessed inside the body (210),
a second body groove (210h2) positioned between the first body side surface (210S1) and the fourth body side surface (210S4), formed by being recessed inside the body (210), and being vertically adjacent to the first body groove (210h1),
a third body groove (210h3) positioned between the first body side surface (21051) and the second body side surface (210S2) and formed by being recessed inside the body (210), and
a fourth body groove (210h4) positioned between the first body side surface (210S1) and the second body side surface (210S2), formed by being recessed inside the body (210), and being vertically adjacent to the third body groove (210h3),
wherein, when the reflective sheet (126) placed on the substrate (122) is detached from the substrate (122), the coupling hole (132C) of the reflective sheet (126) is inserted into one of the first, second, third or fourth grooves (210h1, 210h2, 210h3, 210h4) of the supporter (200), thereby damage to the light source (1240) is prevented while the reflective sheet (126) is detached from the substrate (122).

2. The display device of claim 1, wherein the guide inclined surface (231I, 232I, 233I, 234I) is smoothly extended to the side surface of the body (210).

3. The display device of claim 1, wherein the first guide inclined surface (2311) and the third guide inclined surface (233I) are symmetrical with respect to the center (230C) of the guide (230), and
the second guide inclined surface (232I) and the fourth guide inclined surface (234I) are symmetrical with respect to the center (230C) of the guide (230).

4. The display device of claim 1, wherein the guide (230) has elasticity.

## Patentansprüche

1. Anzeigevorrichtung (10) aufweisend:
eine Anzeigetafel (110);
ein Substrat (122), das hinter der Anzeigetafel (110) angeordnet ist;
mehrere Lichtquellen (1240), die auf dem Substrat (122) angebracht sind und Licht für die Anzeigetafel (110) bereitstellen;
eine reflektierende Folie (126), die auf dem Substrat (122) angeordnet ist, und mehrere Löcher (132), die entsprechend den Positionen der mehreren Lichtquellen (1240) ausgebildet sind, und ein Kopplungsloch (132C), das zwischen den mehreren Löchern (132) ausgebildet ist; und
einen Träger (200), der einen Körper (210) aufweist, der am Substrat (122) befestigt und in das Kopplungsloch (132C) eingesetzt ist; und
wobei der Träger (200) eine Führung (230) umfasst, die sich allmählich verjüngt und sich von einer Oberseite des Körpers (210) zur Anzeigetafel (110) erstreckt,
wobei der Körper (210) des Trägers (200) eine dem Kopplungsloch (132C) entsprechende Zylinderform hat, und
die Führung (230) des Trägers (200) eine geneigte Führungsfläche (231I, 232I, 233I, 234I) umfasst, die sich von einer Seitenfläche des Körpers (210) aus erstreckt,
wobei die Führung (230) des Trägers (200) umfasst:
eine Mitte (230C) der Führung (230), die ein oberes Ende bildet;
eine erste geneigte Führungsfläche (2311), die sich von der Mitte (230C) der Führung (230) zur Seitenfläche des Körpers (210) erstreckt;
eine zweite geneigte Führungsfläche (232I), die sich von der Mitte (230C) der Führung (230) zur Seitenfläche des Körpers (210) erstreckt;
eine dritte geneigte Führungsfläche (233I), die sich von der Mitte (230C) der Führung (230) zur Seitenfläche des Körpers (210) erstreckt; und
eine vierte geneigte Führungsfläche (234I), die sich von der Mitte (230C) der Führung (230) zur Seitenfläche des Körpers (210) erstreckt,
wobei der Körper (210) des Trägers (200) umfasst:
eine erste Körperseitenfläche (210S1), die sich von der ersten geneigten Führungsfläche (231I) aus erstreckt und ein oberes Ende und ein unteres Ende des Körpers (210) verbindet;
eine zweite Körperseitenfläche (210S2), die sich von der zweiten geneigten Führungsfläche (232I) aus erstreckt und das obere Ende und das untere Ende des Körpers (210) verbindet;
eine dritte Körperseitenfläche (210S3), die sich von der dritten geneigten Führungsfläche (233I) aus erstreckt und das obere Ende und das untere Ende des Körpers (210) verbindet; und,
eine vierte Körperseitenfläche (210S4), die sich von der vierten geneigten Führungsfläche (234I) aus erstreckt und das obere Ende und das untere Ende des Körpers (210) verbindet, wobei der Körper (210) umfasst:
eine erste Körpernut (210h1), die zwischen der ersten Körperseitenfläche (210S1) und der vierten Körperseitenfläche (210S4) angeordnet ist und durch Einlassen ins Innere des Körpers (210) ausgebildet ist,
eine zweite Körpernut (210h2), die zwischen der ersten Körperseitenfläche (210S1) und der vierten Körperseitenfläche (210S4) angeordnet ist, durch Einlassen ins Innere des Körpers (210) ausgebildet ist und vertikal an die erste Körpernut (210h1) angrenzt,
eine dritte Körpernut (210h3), die zwischen der ersten Körperseitenfläche (210S1) und der zweiten Körperseitenfläche (210S2) angeordnet ist und durch Einlassen ins Innere des Körpers (210) ausgebildet ist, und
eine vierte Körpernut (210h4), die zwischen der ersten Körperseitenfläche (210S1) und der zweiten Körperseitenfläche (210S2) angeordnet ist, durch Einlassen ins Innere des Körpers (210) ausgebildet ist und vertikal an die dritte Körpernut (210h3) angrenzt,
wobei
das Kopplungsloch (132C) der reflektierenden Folie (126) in eine der ersten, zweiten, dritten oder vierten Nut (210h1, 210h2, 210h3, 210h4) des Trägers (200) eingesetzt wird, wenn die auf dem Substrat (122) angeordnete reflektierende Folie (126) vom Substrat (122) gelöst wird, wodurch eine Beschädigung der Lichtquelle (1240) beim Lösen der reflektierenden Folie (126) vom Substrat (122) verhindert wird.

2. Anzeigevorrichtung nach Anspruch 1, wobei die geneigte Führungsfläche (231I, 232I, 233I, 234I) nahtlos zur Seitenfläche des Körpers (210) verlängert ist.

3. Anzeigevorrichtung nach Anspruch 1, wobei die erste geneigte Führungsfläche (231I) und die dritte geneigte Führungsfläche (233I) in Bezug auf die Mitte (230C) der Führung (230) symmetrisch sind, und
die zweite geneigte Führungsfläche (232I) und die vierte geneigte Führungsfläche (234I) in Bezug auf die Mitte (230C) der Führung (230) symmetrisch sind.

4. Anzeigevorrichtung nach Anspruch 1, wobei die Führung (230) Elastizität aufweist.

## Revendications

1. Dispositif d'affichage (10) comprenant :
un panneau d'affichage (110) ;
un substrat (122) positionné derrière le panneau d'affichage (110) ;
une pluralité de sources lumineuses (1240) montées sur le substrat (122) et fournissant une lumière au panneau d'affichage (110) ;
une feuille réfléchissante (126) positionnée sur le substrat (122), et comportant une pluralité de trous (132) formés en correspondance avec des positions de la pluralité de sources lumineuses (1240) et un trou de couplage (132C) formé entre la pluralité de trous (132) ; et
un support (200) comprenant un corps (210) fixé au substrat (122) et inséré dans le trou de couplage (132C) ; et
le support (200) incluant un guide (230) qui s'effile progressivement et s'étend depuis un côté supérieur du corps (210) vers le panneau d'affichage (110),
dans lequel le corps (210) du support (200) est une forme cylindrique correspondant au trou de couplage (132C), et
le guide (230) du support (200) comporte une surface inclinée de guide (231I, 232I, 2331, 234I) s'étendant depuis une surface latérale du corps (210),
dans lequel le guide (230) du support (200) comporte :
un centre (230C) du guide (230) formant une extrémité supérieure ;
une première surface inclinée de guide (231I) s'étendant depuis le centre (230C) du guide (230) jusqu'à la surface latérale du corps (210) ;
une deuxième surface inclinée de guide (232I) s'étendant depuis le centre (230C) du guide (230) jusqu'à la surface latérale du corps (210) ;
une troisième surface inclinée de guide (233I) s'étendant depuis le centre (230C) du guide (230) jusqu'à la surface latérale du corps (210) ; et
une quatrième surface inclinée de guide (232I) s'étendant depuis le centre (230C) du guide (230) jusqu'à la surface latérale du corps (210),
dans lequel le corps (210) du support (200) comporte :
une première surface latérale de corps (210S1) s'étendant depuis la première surface inclinée de guide (2311) et reliant une extrémité supérieure et une extrémité inférieure du corps (210) ;
une deuxième surface latérale de corps (210S2) s'étendant depuis la deuxième surface inclinée de guide (232I) et reliant l'extrémité supérieure et l'extrémité inférieure du corps (210) ;
une troisième surface latérale de corps (210S3) s'étendant depuis la troisième surface inclinée de guide (233I) et reliant l'extrémité supérieure et l'extrémité inférieure du corps (210) ; et
une quatrième surface latérale de corps (210S4) s'étendant depuis la quatrième surface inclinée de guide (234I) et reliant l'extrémité supérieure et l'extrémité inférieure du corps (210),
dans lequel le corps (210) comporte :
une première rainure de corps (210h1) positionnée entre la première surface latérale de corps (21051) et la quatrième surface latérale de corps (210S4) et formée en étant évidée à l'intérieur du corps (210),
une deuxième rainure de corps (210h2) positionnée entre la première surface latérale de corps (210S1) et la quatrième surface latérale de corps (210S4), formée en étant évidée à l'intérieur du corps (210), et étant verticalement adjacente à la première rainure de corps (210h1),
une troisième rainure de corps (210h3) positionnée entre la première surface latérale de corps (210S1) et la deuxième surface latérale de corps (210S2) et formée en étant évidée à l'intérieur du corps (210), et
une quatrième rainure de corps (210h4) positionnée entre la première surface latérale de corps (210S1) et la deuxième surface latérale de corps (210S2), formée en étant évidée à l'intérieur du corps (210), et étant verticalement adjacente à la troisième rainure de corps (210h3),
dans lequel,
lorsque la feuille réfléchissante (126) placée sur le substrat (122) est détachée du substrat (122), le trou de couplage (132C) de la feuille réfléchissante (126) est inséré dans l'une parmi les première, deuxième, troisième et quatrième rainures (210h1, 210h2, 210h3, 210h4) du support (200), ce qui empêche une détérioration de la source lumineuse (1240) pendant que la feuille réfléchissante (126) est détachée du substrat (122).

2. Dispositif d'affichage selon la revendication 1, dans lequel la surface inclinée de guide (231I, 232I, 2331, 234I) s'étend régulièrement jusqu'à la surface latérale du corps (210).

3. Dispositif d'affichage selon la revendication 1, dans lequel la première surface inclinée de guide (231I) et la troisième surface inclinée de guide (233I) sont symétriques par rapport au centre (230C) du guide (230), et
la deuxième surface inclinée de guide (232I) et la quatrième surface inclinée de guide (234I) sont symétriques par rapport au centre (230C) du guide (230).

4. Dispositif d'affichage selon la revendication 1, dans lequel le guide (230) présente une élasticité.
